# FASCICULE DE BREVET EUROPEEN

(11) **EP 1 420 320 B1**
(45) Date de publication et mention de la délivrance du brevet: **21.12.2005**
(21) Numéro de dépôt: 03292649.5
(22) Date de dépôt: 23.10.2003
(51) Int. Cl.: G05D 1/08

(54) **Système de commandes de vol électriques pour aéronef comportant une détection de couplages oscillatoires de pilotage et organe de pilotage pour un tel système**
System, das eine Anzeigung von Steuerungsschwingungskupplungen verwendet, zur elektrischen Flugsteuerung eines Flugzeugs, sowie Steuerelement für ein solches System
Aircraft fly-by-wire system with detection of pilot-induced oscillatory couplings, and control element for such a system

(30) Priorité: 18.11.2002 FR 0214388
(43) Date de publication de la demande: 19.05.2004
(73) Titulaire: AIRBUS France, 31060 Toulouse (FR)
(72) Inventeur: Raimbault, Nathalie, 31000 Toulouse (FR); Gautier, Jean-Pierre, 31000 Toulouse (FR); Sagansan, Alain, 31770 Colomiers (FR); Fabre, Pierre, 31000 Toulouse (FR)
(74) Mandataire: Bonnetat, Christian

(56) Documents cités:
- US-A- 3 236 478
- US-A- 4 298 833
- US-A- 4 607 202
- US-A- 5 935 177
- US-A1- 2002 135 327

## Description

La présente invention concerne un système de commandes de vol électriques pour un aéronef comportant une détection de couplages oscillatoires de pilotage, ainsi qu'un organe de pilotage pour un tel système de commandes.

On sait que les organes de pilotage (manches, palonniers) des aéronefs modernes, notamment ceux appelés minimanches, sont aisés à manier par le pilote et/ou le copilote desdits aéronefs, leurs basculements pouvant être très rapides. En revanche, les actionneurs des surfaces aérodynamiques mobiles des aéronefs (ailerons, volets, gouvernes, etc ...), commandés à partir de ces organes de pilotage, ne peuvent répondre instantanément aux ordres de pilotage électriques engendrés par ces derniers. Il peut donc exister, aux grandes amplitudes de pilotage, un déphasage important entre le déplacement d'un organe de pilotage et celui des surfaces aérodynamiques mobiles qu'il commande.

Il en résulte que le pilote, constatant que la position des surfaces aérodynamiques mobiles commandées est en retard par rapport à la position choisie pour ledit organe de commande, peut avoir tendance à augmenter encore l'amplitude du basculement dudit organe de commande. Mais alors, l'amplitude du braquage des surfaces aérodynamiques peut dépasser celle correspondant à l'ordre de pilotage initial, de sorte que le pilote réduit le basculement dudit organe de commande, ce qui entraîne, avec retard, un retour des surfaces aérodynamiques, etc ... Il apparaît donc, dans l'aéronef, un couplage oscillatoire de pilotage --généralement désigné par couplage PIO (Pilot Induced Oscillations) en aéronautique-- qui peut dégrader la précision du pilotage.

Pour tenter de résoudre un tel problème, il est connu d'augmenter le dimensionnement des actionneurs des surfaces aérodynamiques commandées et de leurs alimentations hydrauliques et électriques, ce qui augmente les coûts et la masse de l'aéronef. De telles augmentations de coûts et de masse peuvent devenir insupportables pour des aéronefs de grandes dimensions.

Par ailleurs, le document US-A-4 298 833 prévoit de traiter l'ordre de pilotage, notamment par filtrage, pour le transformer en un ordre de commande exempt de couplage oscillatoire de pilotage. Cependant, ce traitement s'effectue sans réelle détection des oscillations de couplage et à l'insu du pilote, qui peut donc continuer à les engendrer.

La présente invention a pour objet de remédier à ces inconvénients. Elle concerne un système de commandes de vol électriques et un organe de pilotage prévenant le pilote de l'apparition d'un couplage oscillatoire de pilotage et agissant pour en éviter les effets.

A cette fin, selon l'invention, le système de commandes de vol électriques pour aéronef, comportant :
- un organe de pilotage mobile, apte à engendrer au moins un ordre de pilotage électrique pour la commande dudit aéronef autour d'au moins l'un de ses axes de manoeuvre (roulis, tangage, lacet) ; et
- des moyens pour détecter, dans ledit ordre de pilotage, d'éventuelles oscillations correspondant à des couplages oscillatoires de pilotage,
est remarquable en ce que ledit organe de pilotage comporte des moyens d'amortissement commandables aptes à amortir les déplacements dudit organe de pilotage et en ce que lesdits moyens de détection commandent lesdits moyens d'amortissement commandables de façon que ceux-ci exercent sur ledit organe du pilotage une action s'opposant au déplacement de celui-ci, lorsque lesdits moyens de détection détectent de telles oscillations.

Ainsi, grâce à la présente invention, en cas d'apparition d'un couplage oscillatoire de pilotage, ledit organe de pilotage est freiné, ce qui modifie la sensation d'effort ressentie par le pilote --et donc avertit le pilote de la présence d'un tel couplage-- et diminue le déphasage entre la surface aérodynamique commandée et l'organe de pilotage.

L'action desdits moyens d'amortissement commandables sur ledit organe de pilotage peut être d'amplitude constante quelle que soit l'amplitude desdites oscillations. Cependant, dans le cas avantageux où lesdits moyens de détection délivrent un signal de détection dont l'amplitude est d'autant plus grande que l'amplitude desdites oscillations est plus grande (voir par exemple le détecteur décrit dans la demande de brevet français déposée le 18 novembre 2002, au nom de la demanderesse, sous le numéro 02 14381), l'action desdits moyens d'amortissement commandables sur ledit organe de pilotage peut, avantageusement, être d'autant plus importante que l'amplitude desdites oscillations est plus grande.

La présente invention concerne, de plus, un organe de pilotage mobile, apte à engendrer au moins un ordre de pilotage électrique pour la commande d'un aéronef autour d'au moins l'un de ses axes de manoeuvre, ledit organe de pilotage étant destiné à un système de commandes de vol électriques comportant des moyens de détection d'éventuels couplages oscillatoires de pilotage dans ledit ordre de pilotage. Selon l'invention, cet organe de pilotage, par exemple du type manche ou palonnier, est remarquable en ce qu'il comporte des moyens d'amortissement commandables pour ledit organe de pilotage et en ce que lesdits moyens d'amortissement commandables sont commandés par lesdits moyens de détection de façon que lesdits moyens d'amortissement commandables exercent sur ledit organe de pilotage une action s'opposant à la vitesse de déplacement de celui-ci, lorsque lesdits moyens de détection détectent de telles oscillations.

On remarquera que, de façon connue, les organes de pilotage sont déjà équipés de moyens d'amortissement structuraux aptes à éviter des mouvements de pilotage trop rapides. Il en résulte que lesdits moyens d'amortissement commandables peuvent être montés en parallèle sur lesdits moyens d'amortissement structuraux.

Cependant, notamment lorsque lesdits moyens de détection d'oscillations sont intégrés dans le calculateur de commandes de vol électrique dudit système (voir la demande de brevet précitée), il est avantageux que lesdits moyens d'amortissement structuraux et lesdits moyens d'amortissement commandables soient formés par un unique amortisseur commandable, commandé par lesdits moyens de détection de façon que :
- en absence desdites oscillations, ledit amortisseur unique exerce la fonction desdits moyens d'amortissement structuraux ; et
- en présence desdites oscillations, ledit amortisseur unique exerce la fonction desdits moyens d'amortissement commandables.

Lesdits moyens d'amortissement commandables peuvent être de types connus mécaniques ou hydrauliques.

Toutefois, de préférence, lesdits moyens d'amortissement commandables sont constitués par une machine magnétique, par exemple une machine synchrone à rotor à aimants permanents, contrôlée de façon connue pour délivrer un couple résistant variable en fonction de la vitesse de rotation.

Bien entendu, notamment lorsqu'il est de type manche, ledit organe de pilotage peut être apte à engendrer deux ordres de pilotage électriques pour la commande dudit aéronef autour de deux de ses axes de manoeuvre et être destiné à un système de commandes de vol électriques comportant des moyens pour détecter, dans chacun desdits ordres de pilotage, d'éventuelles oscillations correspondant à des couplages oscillatoires de pilotage.

Dans ce cas, ledit organe de pilotage comporte des moyens d'amortissement commandables, commandés par lesdits moyens de détection des oscillations et aptes à agir sur ledit organe de pilotage dans ses déplacements correspondant à chacun desdits ordres de pilotage.

Les figures du dessin annexé feront bien comprendre comment l'invention peut être réalisée. Sur ces figures, des références identiques désignent des éléments semblables.

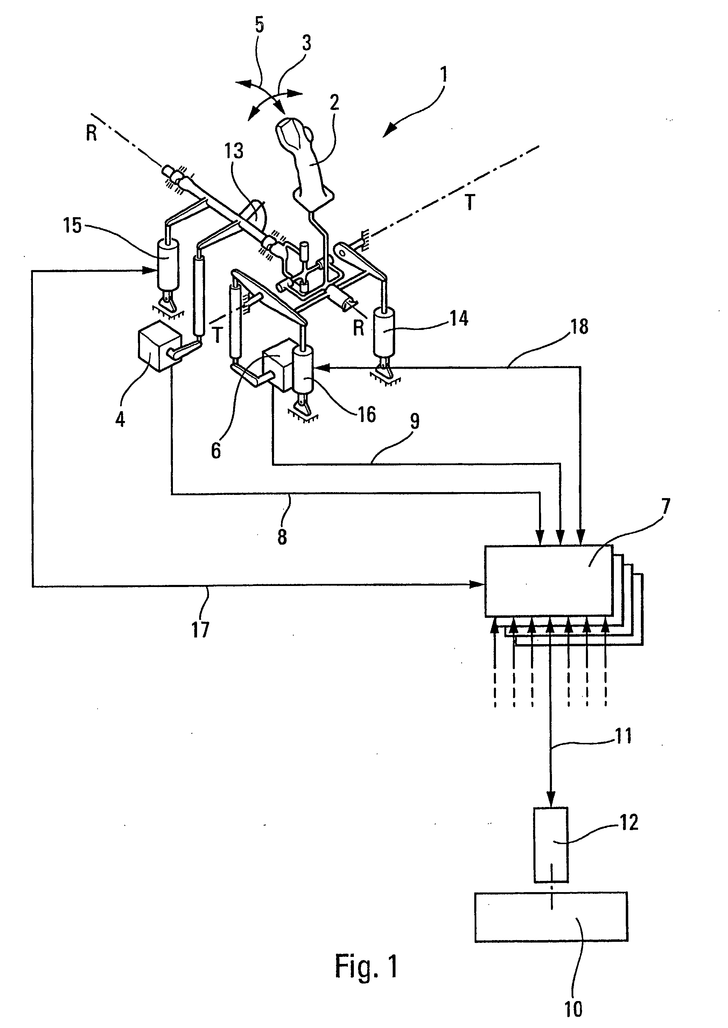

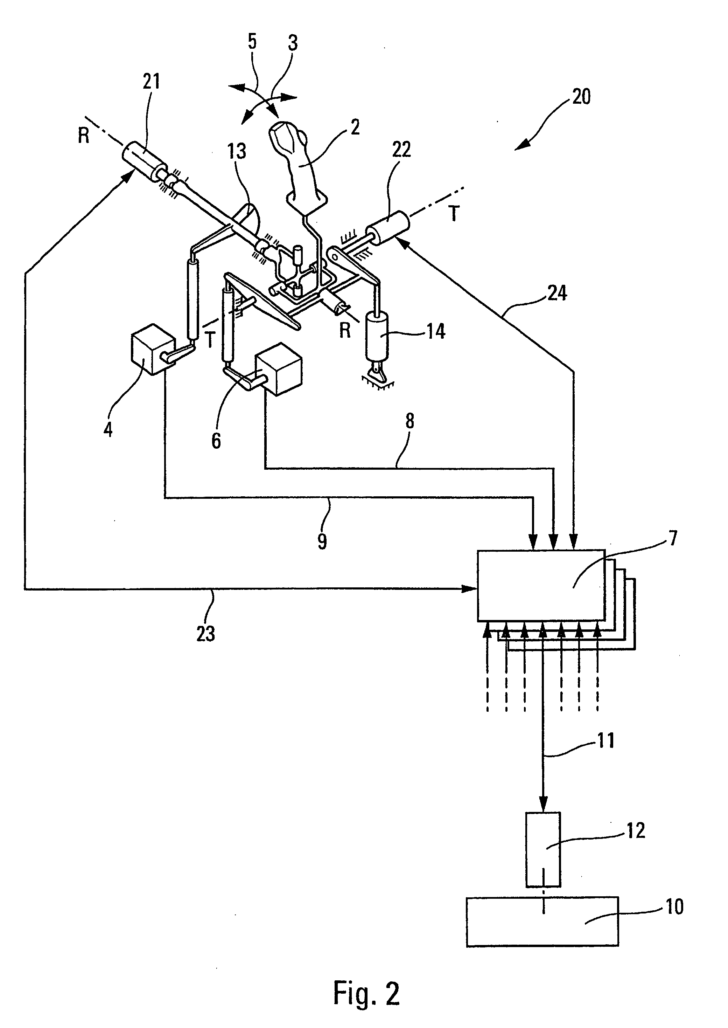

Les figures 1 et 2 illustrent schématiquement deux modes de réalisation de la présente invention.

Le système de commandes de vol électriques pour aéronef, illustré schématiquement sur la figure 1, comporte un système de manche de pilotage 1, apte à engendrer un ordre de pilotage en roulis et un ordre de pilotage en tangage.

Le système de manche de pilotage 1 comporte une poignée mobile 2 qui, par l'intermédiaire d'un mécanisme connu, est apte à pivoter autour d'un axe R-R de pilotage en roulis et d'un axe T-T de pilotage en tangage.

Le basculement de la poignée 2 autour de l'axe de pilotage en roulis R-R (double flèche 3) est détecté par un capteur 4. De même, le basculement de la poignée 2 autour de l'axe de pilotage en tangage T-T (double flèche 5) est détecté par un capteur 6.

Les capteurs 4 et 6 engendrent des ordres de pilotage électriques en roulis et en tangage, qui correspondent aux basculements de la poignée 2 et qui sont adressés aux calculateurs de commandes de vol électriques 7 dudit système, par des lignes 8 et 9, respectivement. Les calculateurs 7 calculent des ordres de braquage correspondants pour des surfaces aérodynamiques commandées (volets, ailerons, gouvernes, etc ...) 10 dudit aéronef (non représenté) et adressent, par des lignes 11, des ordres électriques de commande appropriés aux actionneurs 12 de ces surfaces aérodynamiques commandées 10.

De façon connue, sur les axes de pilotage en roulis et en tangage, sont prévus des dispositifs de sensation artificielle 13 et 14 fournissant des sensations d'efforts au pilote. Le dispositif 13 est par exemple constitué par des ciseaux à ressorts et le dispositif 14 par une bielle à ressorts.

Par ailleurs, conformément à une particularité importante de la présente invention, le système de manche de pilotage 1 comporte deux amortisseurs 15 et 16, dont les caractéristiques d'amortissement peuvent être modifiées par ordre électrique. Ils sont, par exemple, de types connus mécaniques ou hydrauliques. L'amortisseur commandable 15 est relié à l'axe de roulis R-R et l'amortisseur commandable 16 est relié à l'axe de tangage R-R, pour amortir la rotation de la poignée 2 autour de ces deux axes.

De plus, les calculateurs de commandes de vol électriques 7 incorporent des moyens de détection d'éventuelles oscillations, correspondant à des couplages oscillatoires de pilotage, dans les ordres de pilotage issus des capteurs 4 et 6, ces moyens de détection étant aptes à délivrer, sur des lignes respectives 17 et 18 à destination desdits amortisseurs 15 et 16, des ordres de modification des caractéristiques d'amortissement de ces derniers en fonction de l'amplitude desdits couplages.

Le fonctionnement du système de la figure 1 est le suivant :
- lorsque le pilote (non représenté) actionne la poignée 2 en basculement de façon que l'ordre de roulis (et/ou de tangage) issu du capteur 4 (et/ou du capteur 6) est exempt ou quasiment exempt de couplages oscillatoires de pilotage, les moyens de détection des calculateurs de vol 7 adressent à l'amortisseur 15 (et/ou 16), par la ligne 17 (et/ou 18), un ordre électrique réglant sa caractéristique d'amortissement à la valeur désirée pour que ledit amortisseur joue le rôle usuel d'amortisseur structural du système de manche 1 ;
- en revanche, lorsque l'action du pilote sur la poignée basculante 2 engendre un couplage oscillatoire dans l'ordre de roulis (et/ou de tangage) issu du capteur 4 (et/ou du capteur 6), les moyens de détection des calculateurs de vol. 7 adressent à l'amortisseur 15 (et/ou l'amortisseur 16), par l'intermédiaire de la ligne 17 (et/ou 18), un ordre électrique de durcissement de sa caractéristique d'amortissement, ce durcissement étant soit constant, soit d'autant plus grand que l'amplitude desdites oscillations est plus grande. Les basculements de la poignée 2 sont donc alors freinés.

Dans la variante de réalisation de la figure 2, on retrouve les éléments 2 à 14 décrits en regard de la figure 1. Cependant, dans le cas de la figure 2, le système de manche de pilotage 20 comporte des amortisseurs électriques 21 et 22, à la place des amortisseurs mécaniques ou hydrauliques 15 et 16. Les amortisseurs 21 et 22 sont, par exemple, des machines synchrones dont le rotor porte des aimants permanents et est calé sur l'axe R-R ou sur l'axe T-T, respectivement.

Ainsi, le couple résistant exercé par ces machines synchrones sur lesdits axes peut être commandé par des ordres électriques engendrés par les moyens de détection desdites oscillations des calculateurs 7 et adressés auxdits amortisseurs 21 et 22, par l'intermédiaire de lignes 23 ou 24, respectivement.

## Revendications

1. Système de commandes de vol électriques pour aéronef, comportant :
- un organe de pilotage mobile (1, 20), apte à engendrer au moins un ordre de pilotage électrique pour la commande dudit aéronef autour d'au moins l'un de ses axes de manoeuvre ; et
- des moyens (7) pour détecter, dans ledit ordre de pilotage, d'éventuelles oscillations correspondant à des couplages oscillatoires de pilotage,
**caractérisé en ce que** ledit organe de pilotage (1, 20) comporte des moyens d'amortissement commandables (15, 16 ; 21, 22) aptes à amortir les déplacements dudit organe de pilotage et **en ce que** lesdits moyens de détection (7) commandent lesdits moyens d'amortissement commandables de façon que ceux-ci exercent sur ledit organe du pilotage (1, 20) une action s'opposant à la vitesse de déplacement de celui-ci, lorsque lesdits moyens de détection (7) détectent de telles oscillations.

2. Système de commandes de vol selon la revendication 1,
**caractérisé en ce que** l'action desdits moyens d'amortissement commandables (15, 16 ; 21, 22) sur ledit organe de pilotage (1, 20) est d'amplitude constante quelle que soit l'amplitude desdites oscillations.

3. Système de commandes de vol selon la revendication 1, dans lequel lesdits moyens de détection (7) délivrent un signal de détection dont l'amplitude est d'autant plus grande que l'amplitude desdites oscillations est plus grande,
**caractérisé en ce que** l'action desdits moyens d'amortissement commandables (15, 16 ; 21, 22) sur ledit organe de pilotage (1, 20) est d'autant plus importante que l'amplitude desdites oscillations est plus grande.

4. Organe de pilotage mobile (1, 20), apte à engendrer au moins un ordre de pilotage électrique pour la commande d'un aéronef autour d'au moins l'un de ses axes de manoeuvre, ledit organe de pilotage étant destiné à un système de commandes de vol électriques comportant des moyens (7) pour détecter, dans ledit ordre de pilotage, d'éventuelles oscillations correspondant à des couplages oscillatoires de pilotage,
**caractérisé en ce qu'**il comporte des moyens d'amortissement commandables (15, 16 ; 21, 22) pour ledit organe de pilotage et **en ce que** lesdits moyens d'amortissement commandables sont commandés par lesdits moyens de détection (7) de façon que lesdits moyens d'amortissement commandables exercent sur ledit organe de pilotage une action s'opposant à la vitesse de déplacement de celui-ci, lorsque lesdits moyens de détection détectent de telles oscillations.

5. Organe de pilotage mobile selon la revendication 4, comportant des moyens d'amortissement structuraux aptes à éviter des mouvements de pilotage trop rapides,
**caractérisé en ce que** lesdits moyens d'amortissement commandables sont montés en parallèle sur lesdits moyens d'amortissement structuraux.

6. Organe de pilotage mobile selon la revendication 4, comportant des moyens d'amortissement structuraux aptes à éviter des mouvements de pilotage trop rapides et destiné à un système de commandes de vol électriques dans lequel lesdits moyens de détection sont intégrés au calculateur de commandes de vol électriques (7) dudit système,
**caractérisé en ce que** lesdits moyens d'amortissement structuraux et lesdits moyens d'amortissement commandables sont formés par un unique amortisseur commandable (15, 16), commandé par lesdits moyens de détection (7) de façon que :
- en absence desdites oscillations, ledit amortisseur unique exerce la fonction desdits moyens d'amortissement structuraux ; et
- en présence desdites oscillations, ledit amortisseur unique exerce la fonction desdits moyens d'amortissement commandables.

7. Organe de pilotage selon l'une des revendications 4 à 6,
**caractérisé en ce que** lesdits moyens d'amortissement commandables (15, 16) sont mécaniques ou hydrauliques.

8. Organe de pilotage selon l'une des revendications 4 à 6,
**caractérisé en ce que** lesdits moyens d'amortissement commandables (21, 22) sont constitués par une machine magnétique.

9. Organe de pilotage selon la revendication 8,
**caractérisé en ce que** ladite machine magnétique est une machine synchrone à rotor à aimants permanents.

10. Organe de pilotage selon l'une des revendications 4 à 9, apte à engendrer deux ordres de pilotage électriques pour la commande dudit aéronef autour de deux de ses axes de manoeuvre et destiné à un système de commandes de vol électriques comportant des moyens (7) pour détecter, dans chacun desdits ordres de pilotage, d'éventuelles oscillations correspondant à des couplages oscillatoires de pilotage,
**caractérisé en ce qu'**il comporte des moyens d'amortissement commandables (15, 16 ; 21, 22), commandés par lesdits moyens de détection (7) et aptes à agir sur ledit organe de pilotage (1, 20) dans ses déplacements correspondant à chacun desdits ordres de pilotage.

## Patentansprüche

1. System zur elektrischen Flugsteuerung eines Flugzeugs mit:
- einem beweglichen Steuerelement (1, 20), das so ausgelegt ist, dass es wenigstens einen elektrischen Steuerbefehl zur Steuerung des Flugzeugs um wenigstens eine seiner Manövrierachsen erzeugt; und
- Mitteln (7) zur Detektion eventueller Schwingungen in dem Steuerbefehl, die Steuerungsschwingungskopplungen entsprechen,
**dadurch gekennzeichnet, dass** das Steuerelement (1, 20) steuerbare Dämpfungsmittel (15, 16; 21, 22) aufweist, die so ausgelegt sind, dass sie die Bewegungen des Steuerelements dämpfen, und dass die Detektionsmittel (7) die steuerbaren Dämpfungsmittel so steuern, dass diese auf das Steuerelement (1, 20) eine Wirkung ausüben, die dessen Bewegung verlangsamt, wenn die Detektionsmittel (7) solche Schwingungen erkennen.

2. System zur Flugsteuerung nach Anspruch 1,
**dadurch gekennzeichnet, dass** die Wirkung der steuerbaren Dämpfungsmittel (15, 16; 21, 22) auf das Steuerelement (1, 20) unabhängig von der Amplitude der Schwingungen eine konstante Amplitude hat.

3. System zur Flugsteuerung nach Anspruch 1, in dem die Detektionsmittel (7) ein Detektionssignal liefern, dessen Amplitude umso größer ist, je größer die Amplitude der Schwingungen ist,
**dadurch gekennzeichnet, dass** die Wirkung der steuerbaren Dämpfungsmittel (15, 16; 21, 22) auf das Steuerelement (1, 20) umso größer ist, je größer die Amplitude der Schwingungen ist.

4. Bewegliches Steuerelement (1, 20), das so ausgelegt ist, dass es wenigstens einen elektrischen Steuerbefehl zur Steuerung eines Flugzeugs um wenigstens eine seiner Manövrierachsen erzeugt, wobei das Steuerorgan für ein elektrisches Flugsteuerungssystem bestimmt ist, das Mittel (7) zur Detektion eventueller Schwingungen in dem Steuerbefehl aufweist, die Steuerungsschwingungskopplungen entsprechen,
**dadurch gekennzeichnet, dass** es steuerbare Dämpfungsmittel (15, 16; 21, 22) für das Steuerorgan aufweist, und dass die steuerbaren Dämpfungsmittel so von den Detektionsmitteln (7) gesteuert werden, dass die steuerbaren Dämpfungsmittel auf das Steuerelement eine Wirkung ausüben, die dessen Bewegung verlangsamt, wenn die Detektionsmittel solche Schwingungen entdecken.

5. Bewegliches Steuerelement nach Anspruch 4, das bauliche Dämpfungsmittel aufweist, die so ausgelegt sind, dass sie zu schnelle Steuerbewegungen verhindern,
**dadurch gekennzeichnet, dass** die steuerbaren Dämpfungsmittel parallel auf den baulichen Dämpfungsmitteln montiert sind.

6. Bewegliches Steuerelement nach Anspruch 4, das bauliche Dämpfungsmittel aufweist, die so ausgelegt sind, dass sie zu schnelle Steuerbewegungen verhindern, und für ein elektrisches Flugsteuerungssystem bestimmt ist, in dem die Detektionsmittel in den elektrischen Flugsteuerungsrechner (7) des Systems integriert sind,
**dadurch gekennzeichnet, dass** die baulichen Dämpfungsmittel und die steuerbaren Dämpfungsmittel von einer einzigen steuerbaren Dämpfungsvorrichtung (15, 16) gebildet werden, die so von den
Detektionsmitteln (7) gesteuert wird, dass:
- wenn keine Schwingungen vorhanden sind, diese Einzeldämpfungsvorrichtung die Funktion der baulichen Dämpfungsmittel ausübt; und
- wenn Schwingungen vorhanden sind, diese Einzeldämpfungsvorrichtung die Funktion der steuerbaren Dämpfungsmittel ausübt.

7. Steuerelement nach einem der Ansprüche 4 bis 6,
**dadurch gekennzeichnet, dass** die steuerbaren Dämpfungsmittel (15, 16) mechanisch oder hydraulisch sind.

8. Steuerelement nach einem der Ansprüche 4 bis 6,
**dadurch gekennzeichnet, dass** die steuerbaren Dämpfungsmittel (21, 22) von einer Magnetmaschine gebildet werden.

9. Steuerelement nach Anspruch 8,
**dadurch gekennzeichnet, dass** die Magnetmaschine eine Synchronmaschine mit Permanentmagnetrotor ist.

10. Steuerelement nach einem der Ansprüche 4 bis 9, das so ausgelegt ist, dass es zwei elektrische Steuerbefehle zur Steuerung des Flugzeugs um zwei seiner Manövrierachsen erzeugt und für ein elektrisches Flugsteuerungssystem bestimmt ist, das Mittel (7) aufweist, um in dem jeweiligen Steuerbefehl eventuelle Schwingungen zu entdecken, die Steuerungsschwingungskopplungen entsprechen,
**dadurch gekennzeichnet, dass** es steuerbare Dämpfungsmittel (15, 16; 21, 22) aufweist, die von den Detektionsmitteln (7) gesteuert werden und so ausgelegt sind, dass sie die Bewegungen des Steuerelements (1, 20), die dem jeweiligen Steuerbefehl entsprechen, beeinflussen.

## Claims

1. A fly-by-wire control system involving electric flight commands for an aircraft, comprising:
- a mobile control (1, 20) able to generate at least one electric command for controlling said aircraft about at least one of its axes of maneuver; and
- means (7) for detecting, in said command, any oscillations corresponding to pilot induced oscillations,
wherein said control (1,20) comprises controllable damping means (15,16 ; 21,22) able to damp the movements of said control and wherein said detection means (7) control said controllable damping means in such a way that these exert on said control (1,20) an action that opposes the rate of travel of the latter when said detection means (7) detect such oscillations.

2. The system of flight controls as claimed in claim 1,
wherein the action of said controllable damping means (15,16 ; 21,22) on said control (1,20) is of an amplitude that is constant irrespective of the amplitude of said oscillations.

3. The system of flight controls as claimed in claim 1, in which said detection means (7) deliver a detection signal the amplitude of which increases with the amplitude of said oscillations,
wherein the action of said controllable damping means (15,16 ; 21,22) on said control (1,20) increases in magnitude with the amplitude of said oscillations.

4. A mobile control (1,20) able to generate at least one electric command for controlling an aircraft about at least one of its axes of maneuver, said control being intended for a fly-by-wire control system comprising means (7) for detecting, in said command, any oscillations corresponding to pilot induced oscillations,
and which comprises controllable damping means (15,16 ; 21,22) for said control and wherein said controllable damping means are controlled by said detection means in such a way that said controllable damping means (7) exert on said control an action that opposes the rate of travel of the latter when said detection means detect such oscillations.

5. The mobile control as claimed in claim 4, comprising structural damping means able to avoid excessively rapid flight-control movements,
wherein said controllable damping means are mounted in parallel on said structural damping means.

6. The mobile control as claimed in claim 4, comprising structural damping means able to avoid excessively rapid flight-control movements and intended for a fly-by-wire control system in which said detection means are incorporated into the fly-by-wire computer (7) of said system,
wherein said structural damping means and said controllable damping means are formed of a single controllable damper (15,16) controlled by said detection means (7) such that:
- in the absence of said oscillations, said single damper performs the function of said structural damping means; and
- in the presence of said oscillations, said single damper performs the function of said controllable damping means.

7. The control as claimed in anyone of claims 4 to 6,
wherein said controllable damping means (15,16) are mechanical or hydraulic.

8. The control as claimed in anyone of claims 4 to 6,
wherein said controllable damping means (21,22) are formed by a magnetic machine.

9. The control as claimed in claim 8,
wherein said magnetic machine is a synchronous machine with a permanent-magnet rotor.

10. The control as claimed in anyone of claims 4 to 9, able to generate two electric commands for controlling said aircraft about two of its axes of maneuver and intended for a fly-by-wire control system comprising means (7) for detecting, in each of said commands, any oscillations corresponding to pilot induced oscillations,
and which comprises controllable damping means (15,16 ; 21,22) controlled by said detection means (7) and able to act on said control (1,20) in its movements corresponding to each of said commands.
